# EUROPEAN PATENT SPECIFICATION

(11) **EP 1 053 113 B1**
(45) Date of publication and mention of the grant of the patent: **14.05.2003**
(21) Application number: 99932487.4
(22) Date of filing: 11.02.1999
(51) Int. Cl.: B60C 23/04

(54) **ATTACHMENT MEANS FOR A TIRE ELECTRONIC PACKAGE**
BEFESTIGUNGSEINRICHTUNG FÜR EIN ELEKTRONISCHEN MODUL AM REIFEN
DISPOSITIF DE FIXATION DE MODULE ELECTRONIQUE DE PNEU

(30) Priority: 12.02.1998 US 74477 P
(43) Date of publication of application: 22.11.2000
(73) Proprietor: MICHELIN RECHERCHE ET TECHNIQUE S.A., CH-1763 Granges-Paccot (CH)
(72) Inventor: BALZER, Raymond, J., Easley, SC 29642 (US); KEMP, Preston, Butler, Jr., Greenville, SC 29607 (US); YOUNG, Cecil, Lyman, SC 29365 (US); STAFFORD, David, Kevin, F-Perignat les Sarlieves (FR)
(74) Representative: Dequire, Philippe Jean-Marie Denis
(86) International application number: US9902976
(87) International publication number: WO99041093

(56) References cited:
- EP-A- 0 689 950
- FR-A- 2 661 373
- US-A- 3 787 806
- US-A- 4 334 215

## Description

### Background of the Invention

This invention relates to vehicle tires including spare tires, and more particularly to tires specifically designated to include electronic packages for monitoring tire performance and for tire identification. The invention is particularly useful for attaching the electronic package to a tire's inside surface.

With the increased use of electronics for recording, identification and monitoring devices used in vehicle tires the problem of incorporating these electronic packages within or upon the tire continues. Electronic chips or devices have been made to monitor and/or record a number of tire parameters as well as to identify and locate tires. These include manufacturing and inventory data, sales and distribution information, physical performance data, environmental engineering data and the like. Electronic packages can store data to be updated, collect data for future evaluations and/or can be a read on demand device within the scope of this invention. Electronic packages can either have their own energy source or be activated by remote devices. In summary, electronic devices are known to generally provide whatever the user's needs may be. Some typical electronics package are disclosed in U.S. Patent Nos. 4,862,486; 5,218,861; and 5,573,610.

In general, an electronic package is either imbedded within a rubber component of the tire, attached to the tire or fixed to the rim supporting the tire, as well as mounted in the valve stem. The location of the electronics package influences the ability to measure engineering performance parameters such as inflation pressure, tire temperatures, number of revolutions or stress cycles and the like. Remote communication with the electronic package is generally by radio frequency (RF) sound waves. However, RF communication is made difficult by the use of metallic materials within and around the tire due to steel reinforcing members in the tire and a metallic rim plus metallic vehicle parts. A relatively large antenna is generally needed to improve RF communication with the electronic package. The electronic package should be located to be as free from interference from tire and rim components as possible. Typical location and communication problems and some solutions are disclosed in U.S. Patent Nos. 3,873,965; 4,246,567; 5,181,975; and 5,573,611 as well as European Patent No. 0 639 472 A1.

Electronic packages are known to have a life somewhat different than the life of the tire, being either longer or shorter. Energy sources, if any, wear out and the fatigue life of other components are not adequate in many cases resulting in a shorter life for the package. The electronic package may also need to be removed for reprogramming, for updating tire information and/or data collection. In addition, it may be desirable to make changes or repair the electronic components within the package or replace the electronic package with an updated package. A removable electronic package having a longer life than that of the tire within which it is mounted may also be used in another tire when the tire containing an electronic package is removed from service or no longer needs an electronic package.

The problem of adding an electronics package within an existing tire, that has not been modified prior to or during curing to accept such a device, has not been solved in the industry. The desire is to have a method for placing an electronics package in a tire as an aftermarket device. The method should not significantly change the tire or the processes of building and using the tire. This same method could be further used to relocate one or several electronic packages to various locations or multiple locations within a tire to achieve better or different information from the electronic package or packages.

A further problem in the trucking industry is to provide a support system or device to include the electronic package within the tire in a cost effective manner. The problem is further complicated by the need to have a support system that does not require special handling of the tires or special training for tire changers and other maintenance personnel. The use of generally standard maintenance methods and materials, such as typical rubber patches and standard fasteners common to the industry, is most desirable both from a personnel point of view and in view of the costs. Ease of installing and removing the electronic package is desirable. An example of a typical rubber patch which can serve as part of a support system is the tire repair system manufactured by Tech International of Johnstown, Ohio. Typical fasteners known in the industry are disclosed in U.S. Patent Nos. 4,938,645; 5,468,108; and 5,718,025

A need remains to improve the attachment means for affixing an electronic package to the inside of a tire. Although the prior art already knows several electronic packages imbedded or attached to tires, these attachment means do not achieve the desired utility for relocating, replacing or reusing the electronic package. A further need remains to provide the attachment means which can be integrated with a tire either during the manufacturing process or after it is manufactured.

Accordingly, an object of the present invention is to provide an attachment means so that an electronics package can be easily attached to and incorporated within a tire at a desirable location and in a cost effective manner.

Another object of the present invention is to provide an attachment means that allows an electronic package to be removed to be inspected, repaired and/or updated in hardware and stored data; as well as relocated to another tire or replaced by another electronic package.

Yet another object of the present invention is to provide an attachment means which allow aftermarket electronic packages to be incorporated within an existing tire.

A further object of the present invention is to utilize a commercially available mechanical bonding product or agent to attach a support device to an inside surface of a cured tire, or alternately to form either a reinforced or unreinforced rubber ply within a tire during curing of the tire for receiving, holding and supporting an electronic package.

An additional object of the present invention is to allow the electronic package to adjust itself while being retained within the tire so that forces and deformations from the rolling tire are resisted and the fatigue life of the support device is extended.

### Summary of the Invention

The above objectives are accomplished according to the present invention by providing an attachment means and method consisting of a support system or device applied to the inside surface of the tire in the form of a rubber ply for retaining the electronic package within the tire. The support system or device and method of this invention is a cost effective means for incorporating an electronic package within a tire. There are a number of utility advantages when the support system or device is in use. The support system or device can be used as an aftermarket device providing a means to install an electronic package within the cavity of the tire. The electronic package can also be changed to another location within the tire. The attachment means can allow the electronic package to be removed for inspections, repairs, updating stored information and making improvements to the electronics of the package.

In a preferred embodiment of the invention a structural support system is used with a tire for supporting an electronic package for monitoring the tire when placed within a cavity of the tire. The structural support system comprises a reinforced rubber ply affixed to the inner surface of said tire at a predetermined location. At least one fastener is carried by the rubber ply for supporting and retaining the electronics package within the tire. At least one edge element is formed in a retainer opening of the electronic package to receive the fastener. The structural support system further comprises a retainer assembly associated with the fastener and the edge element for holding the electronics package to the inside of the tire adjacent to the reinforced rubber ply, Therefore, any conventional tire can be modified to provide for supporting an electronic device.

In a further embodiment of the present invention the rubber ply includes a plurality of layers for providing compliance between the tire and the fastener. The rubber ply can further include a reinforced layer. or the layers are provided by a folded reinforced rubber ply.

In another embodiment of the present invention a support device is used within a tire for installing and removing an electronic package within the cavity of the tire. The support device comprises a rubber ply affixed to the inner surface of the tire. At least one fastener in the form of a strap, including a pair of free ends, is carried by the rubber ply for supporting and retaining the electronics package within the tire. The support device further comprises a retainer assembly having components associated with the at least one strap and the electronic package for retaining and holding the electronics package inside the tire adjacent the reinforced rubber ply.

In another embodiment of the present invention a method for attaching the support system and the electronics package to the inner surface of a tire is provided. The system-method comprises a first step of forming a conditioned surface area of the tire located interior to the tire for positioning the electronics package within the tire adjacent the surface area location. The second step includes providing a rubber ply having an interface surface associated with the surface area. In a third step the method includes affixing the rubber ply to the surface area so that the rubber ply is supported and held within the tire. The forth step includes providing at least one strap having a pair of free ends so that the at least one strap is carried by the rubber ply. The fifth step includes placing the electronic package within said tire to contact the fastener to the interior of the tire. In a sixth step the method includes supporting and holding the electronic package in contact with the rubber ply using a retainer assembly having components associated with the at least one fastener and the electronic package. The seventh step includes adjusting the retainer assembly to hold the electronic package in a predetermined position adjacent the rubber ply and the inner surface of the tire.

In further embodiments the method includes connecting the pair of free ends of the strap or straps together by providing either hook and loop elements or other similar retainer assemblies. In other embodiments the method includes providing a number of retainer assemblies for connecting the free ends of the strap or straps to the electronic package.

### Description of the Drawings

The construction designed to carry out the invention will hereinafter be described, together with other features thereof. The invention will be more readily understood from a reading of the following specification and by reference to the accompanying drawings forming a part thereof, wherein an example of the invention is shown and wherein:
Figure 1 is a perspective view of a tire section showing a support system of this invention for retaining an electronic package within an internal cavity of the tire;
Figure 2 is a perspective view of a preferred embodiment of the support system of the present invention with a pair of fasteners holding the electronic package adjacent a rubber ply near an inner surface of the tire;
Figure 3 is an perspective view of the support system of the invention showing break away portions of the rubber ply with four rubber layers carrying two fasteners positioned to extend into the tire and with reinforcing members formed integral with one rubber layer according to the preferred embodiment of Fig. 2;
Figure 4 is a perspective view of a first alternate embodiment of the support system of the present invention with a single larger fastener holding the electronic package adjacent a rubber ply near the inner surface of the tire;
Figure 5 is a perspective view of the first alternate embodiment of the support system of Fig.4 showing break away portions of a four layer reinforced rubber ply and the single fastener made to be integral with one layer and positioned to extend into the tire and further with reinforcing members formed integral with one rubber layer;
Figure 6 is a perspective view of a second alternate embodiment of the support system of the present invention with the fastener formed as an elongated strap having hook and loop elements of a retainer assembly to help retain the electronic package adjacent a reinforced rubber ply near the inner surface of the tire;
Figure 7 is a perspective view of the second alternate embodiment of Fig. 6 showing the reinforced rubber ply being a folded reinforced rubber ply having a strap pocket for holding the elongated strap in a position within the tire to be wrapped around the electronic package;
Figure 8 is a perspective view of a third alternate embodiment of the support system with a pair of shafts of the fastener extending through retainer openings in the electronic package to retain the electronic package adjacent the folded reinforced rubber ply near the inner surface of the tire;
Figure 9 is a perspective view of the second alternate embodiment of Fig. 8 showing the folded reinforced rubber ply retaining a base of the fastener within a strap pocket for holding the fastener in a position to extend the two shafts of the fastener within the cavity of the tire to be in a position to receive the electronic package;
Figure 10 is cross-sectional view taken along line 10-10 of Fig. 2 showing four layers of a reinforced rubber ply, a fastener with a base positioned between second and third layers of the reinforced rubber ply and a shaft of the fastener with ratchet elements that engage edge elements of the electronic package;
Figure 11 is cross-sectional view taken along line 11-11 of Fig. 4 showing four layers of a reinforced rubber ply, a fastener formed to be integral with a third layer of the reinforced rubber ply and a shaft of the fastener with ratchet elements that engage edge elements of the electronic package;
Figure 12 is a perspective view of a tire showing a fabric sheet being removed from an inside surface of the cured tire to provide an embossed inner surface area for affixing the rubber ply to the inner surface area according to the preferred embodiment of the present invention;
Figure 13 is a perspective view of a tire showing a plastic sheet being removed from an inside surface of the cured tire to provide a smooth inner surface area for affixing the rubber ply to the inner surface area according to an alternate embodiment of the present invention;
Figure 14 is a perspective view of a fourth alternate embodiment of the support device affixed to the inside surface of a tire with two semi-rigid straps each having a slotted retainer bar to retain the electronic package to retain the electronic package adjacent the folded reinforced rubber ply near the inner surface of the tire;
Figure 15 is a perspective view of the folded rubber ply of the fourth alternate embodiment of Fig. 14 with the two semi-rigid straps each having a slotted rectangular shaped fastener at their outer end, the straps to be placed within a strap pocket of the folded reinforced rubber ply; and
Figure 16 is a cross-sectional view taken along line 16-16 in Fig. 15 showing the two semi-rigid straps interlocked within the strap pocket of the folded reinforced rubber ply according to the fourth alternate embodiment of Fig. 14.

### Description of a Preferred Embodiment

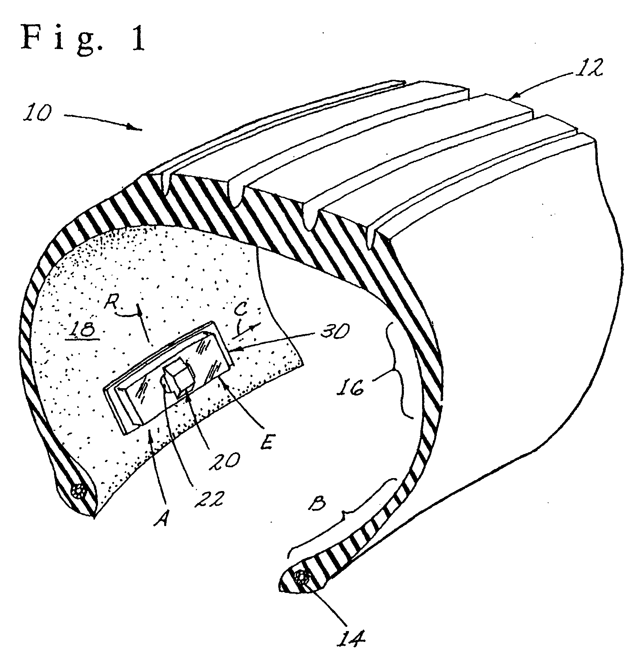

Referring now to the drawings, the invention will be described in more detail. A segment of a tire 10 for use on a vehicle and having a tread 12 for contacting a support surface is illustrated in Fig. 1. An electronic package "E" for storing, monitoring and/or recording information about the tire is supported and retained with the tire to form a support system or package "A" according to the invention. The support system is affixed to an inner surface 18 of the tire. A rubber ply 30, attached to the inner surface 18 of the tire is used to support the electronic package. A reinforced or an unreinforced rubber ply can be used within the scope of this invention, with the preferred rubber ply being reinforced. A retainer assembly 20 of the support system connects and holds the electronic package in contact with the rubber ply. The electronic package is provided with a retainer opening 22 as part of the retainer assembly. The amount of area in contact between inner surface 18 and support system A is adjusted to give adequate support to retain the electronic package generally fixed with respect to the tire during the nominal operation of the vehicle. The mass and size of support system A including the electronic package determines the selection of the surface area of contact with the tire. The location of the support system A within the tire is also chosen to control the effect of inertial forces and tire deformations on the support system including the electronic package. Forces in the radial "R-direction" as well as the circumferential "C-direction" must be considered, as shown by R and C in the figures. Alternate embodiments of the rubber ply and the retainer assembly are disclosed for providing a support system or device to retain a variety of electronic packages within the tire. The alternate embodiments are disclosed to allow for different tire sizes as well as vehicle tire sizes and operations.

The embodiment illustrated in Fig. 1 shows a retainer opening 22 in the electronics package as a part of the retainer assembly, Some embodiments work better than others depending on vehicle operations including tire sizes and usage.

The support system or device of this invention can be affixed at any location to the inner surface of the tire. The preferred location is adjacent the bead area "B" of the tire, as illustrated in Fig. 1. This location generally has less tire deformation and is at a location somewhat easier for monitoring tire information available through the electronic package; as well as being convenient for installing and removing the electronic package. Sidewall area 16 can also be a practical area for locating the electronic package.

A further desirable feature in meeting the object of this invention is realized by being able to remove the electronic package from the tire when desired for updating, replacing or repairing the electronic package. The embodiments of this invention allow the electronic package to be removed from the tire. However, removal is not an essential feature of the present invention if the user wishes to keep the electronic package within the tire during the life of the tire. Removal may be required if a truck tire is to be recapped from time to time; as the electronic package may be damaged during the retreading process.

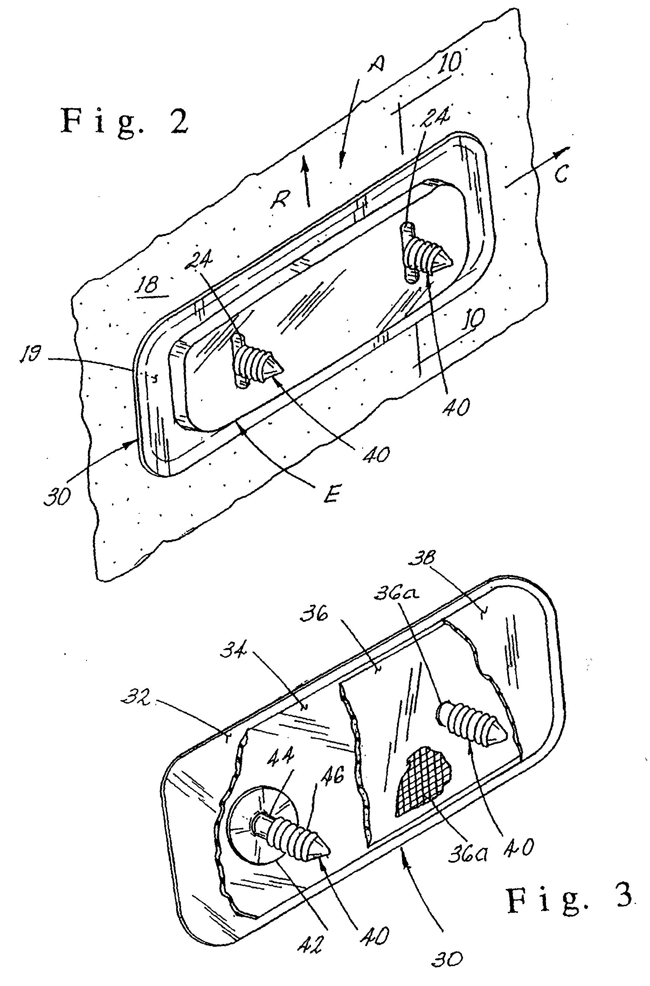

The support system illustrated in Figs. 2 and 3 includes a rubber ply 30 with four layers integrally formed to make a reinforced rubber ply. A first layer 32 extends radially and circumferentially outward of the other layers and is a rubber compound that adherers very well to inner surface 18 of the tire. The first layer is referred to as a sticky mix layer. A third layer 36 provides adequate strength by including reinforcing members 36a extending in both the radial R-direction and the circumferential C-direction. The third layer is referred to as a reinforcing layer. A second layer 34 is placed between the first and third layers to generally provide a transition between the strains from the tire itself to the strains of the reinforced rubber ply. A forth layer 38 covers layers two and three. The forth layer is referred to as a covering layer. Materials used for rubber layers 32-38 are those commonly used in the industry for sticky mix, bonding, reinforcing and covering layers. For example, a typical four layer rubber patch is the "tire repair systems" (catalog no. 169) as manufactured by Tech Industries of Johnstown, Ohio.

A retainer assembly holds the electronics package E in contact with rubber ply 30, as illustrated in Fig. 2 for this preferred embodiment of the invention. Rubber ply 30 is affixed to the inner surface 18 of the tire at a support interface 19. A pair of fasteners 40 each have a fastener base 42 imbedded between the second layer 34 and the third reinforced layer 36 of the rubber ply 30, as illustrated in Fig. 3. Each fastener 40 has a shaft 44 with ratchet elements 46 that extend from fastener base 42. Shaft 44 extends through openings 36a in reinforced layer 36 as well as coexisting openings in cover layer 38.

Electronic package E is made with a pair of retainer openings 24, as illustrated in Fig. 3. The electronics package is attached to the reinforced rubber ply by passing fastener shafts 44 through the retainer openings. Retainer openings 24 are made smaller than the outer dimension of ratchet elements 46 so that the ratchet elements engage edge elements of the retainer openings and hold the electronic package engaged with the reinforced rubber ply. The retainer openings are elongated for providing for easy installation of the electronic package and to allow the electronic package to slightly adjust its position relative to the reinforced rubber ply during running of the vehicle. This adjustment relieves stresses on the support system. The fastener can be made of any material commonly used for fasteners, but is preferably made of a plastic material such as a nylon or a molded rubber.

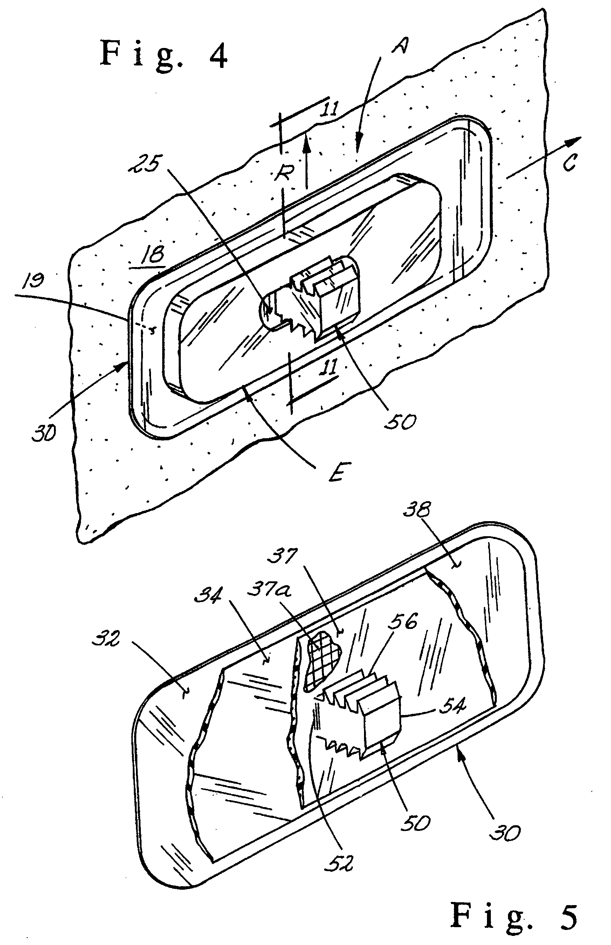

A first alternate embodiment for the retainer assembly of support system A includes providing a similar rubber ply and a single fastener 50, as illustrated in Figs. 4 and 5. The first alternate embodiment of the support device again includes attaching a reinforced rubber ply 30 to inner surface 18 of the tire at attachment interface 19 such that electronic package E is aligned with the radial R-direction and the circumferential C-direction of the tire. The reinforced rubber ply again has four layers. First layer 32, second layer 34 and forth layer 38 are essentially the same as described above. A third layer 37 is provided with reinforcing members 37a. This reinforcing layer 37 is shown in Fig. 5 as being formed as an integral part with single fastener 50. The single fastener has a single shaft 54 extending from reinforcing layer 37 at its base 52. The shaft contains ratchet elements 56 along two radial edges of the shaft to engage edge elements within retainer opening 25 of the electronic package. The single fastener is shown to be rectangular in shape. Other shapes such as round, oval, elliptical, polygonal and the like are within the scope of this invention.

Electronic package E has a single retainer opening 25 to accommodate single fastener 50 as illustrated in Fig. 4. The retainer opening is made to have edge elements that provide an opening width dimension less than the outer dimensions of the single shaft including ratchet elements 56. The difference in these dimensions allows the fastener 50 to retain the electronic package engaged with reinforced rubber ply 30. The retainer opening is made to be elongated in one direction to provide for easy installation of the electronic package and to allow for adjustments in the position of the electronic package relative to the reinforced rubber ply during running of the vehicle. Multiple retainer openings of the type illustrated in this second embodiment are also within the scope of this invention.

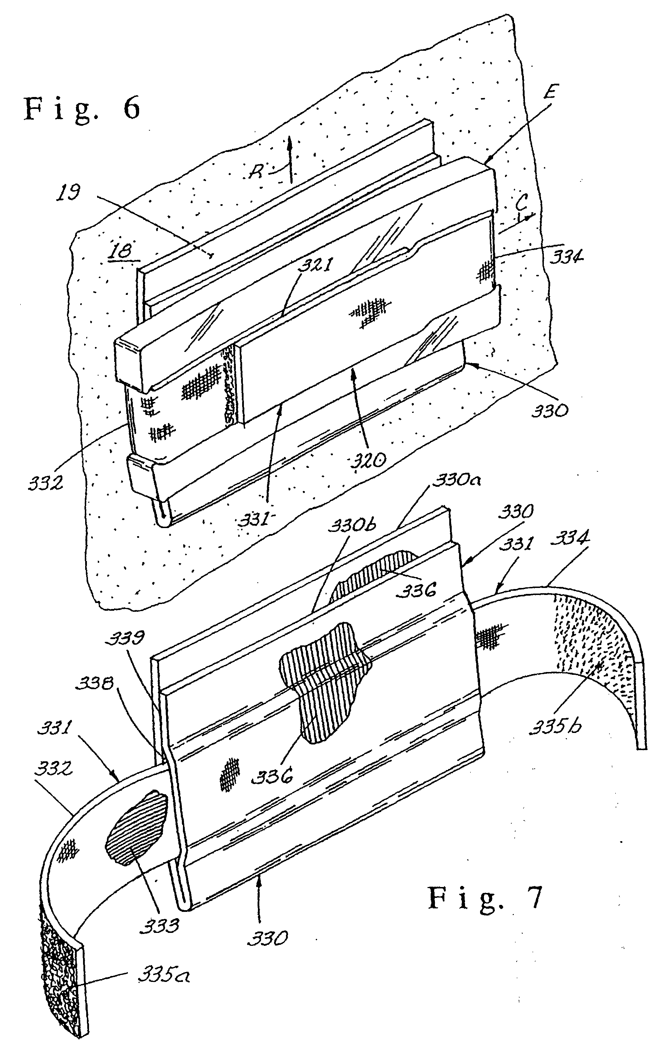

Electronic package E can also be retained and held in a proper location within the tire when using a fastener comprising at least one strap extending in the circumferential C-direction. A second alternate embodiment of the support system A, illustrated in Figs. 6 and 7, shows a single elongated strap 331 folded circumferentially around the electronic package. The rubber ply comprises a folded reinforced rubber ply 330 having a strap pocket 338 for receiving the single continuous strap. The rubber ply is bonded together at interface 339 at both sides of the strap pocket forming an first layer 330a and a second layer 330b of rubber ply 330. The folded rubber ply is reinforced with reinforcing members 336, and the rubber ply is positioned within the tire so that the reinforcing members extend in the radial R-direction. Once again, reinforced rubber ply 330 is affixed to the inner surface 18 of the tire at a support interface 19. A first strap end 332 extends from one end of the strap pocket and a second strap end 334 extends from the other end of the strap pocket. The strap 331 has parallel reinforcing members 333 generally extending in the circumferential C-direction. The electronics package is placed in a position to be retained and the two ends of the strap are wrapped around the electronic package in the circumferential C-direction.

A retainer assembly 320 for the second alternate embodiment includes a hook and loop fastener system. The loop elements 335a are attached to one strap end 332 and the hook elements 335b are attached to the other strap end 334. Placing the hook elements 335b in contact with the loop elements 335a at a retainer interface 321 connects together the two free ends 332 and 334 of the continuous strap 331 to retain and hold electronic package E. Retainer openings are formed as cutouts at both ends of the electronic package. Edge elements within the cutouts are provided to help retain the strap in a proper position around the electronic package (Fig. 6). A further embodiment of retainer assembly 320 can be realized by adding a retainer bar with retainer pins (not shown) to help hold the strap ends in contact with one another.

Similar embodiments to the second alternate embodiment are realized by providing a fastener formed as a strap to wrap around the electronics package in the radial R-direction. The strap ends can also be made as an integral part of a reinforced rubber ply within the scope of this invention. The reinforced rubber ply would have a single layer as a pocket would not be necessary for such an embodiment,

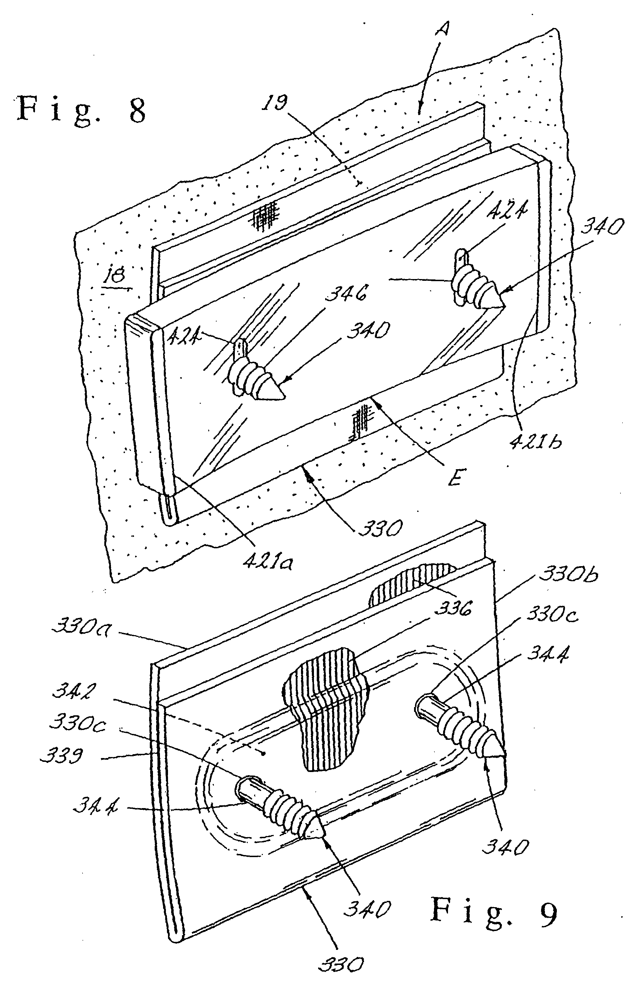

A third alternate embodiment of the invention is realized by providing fasteners similar to those of the preferred embodiment of Figs. 2 and 3 with a folded reinforced rubber ply similar to that of the second alternate embodiment of Figs. 6 and 7. The third alternate embodiment is illustrated in Figs. 8 and 9 to include two fasteners 340 carried by folded reinforced rubber ply 330. The fasteners are made with a common base 342 having two shafts 344 extending from the common base. The reinforced rubber ply is folded to embed the base between a first layer 330a and a second layer 330b of the folded reinforced rubber ply at an interface 339 between the layers. The layers are bonded together at the interface where possible and are bonded to the common base of the fasteners. Openings 330c in the second layer are provided for shafts 344 to extend from the folded reinforced rubber ply. As before, folded reinforced rubber ply 330 is affixed to the inner surface 18 of the tire at a support interface 19.

The retainer assembly of the support system A includes retainer openings 424 provided in the electronic package, as illustrated in Fig. 8. Shafts 344 extend through the retainer openings and have ratchet elements to engage edge elements of the retainer openings and hold electronic package E in contact with folded reinforced rubber ply 330 within the cavity of the tire. Once again, the retainer assembly provides for adjustments in the position of the electronic package relative to the folded reinforced rubber ply.

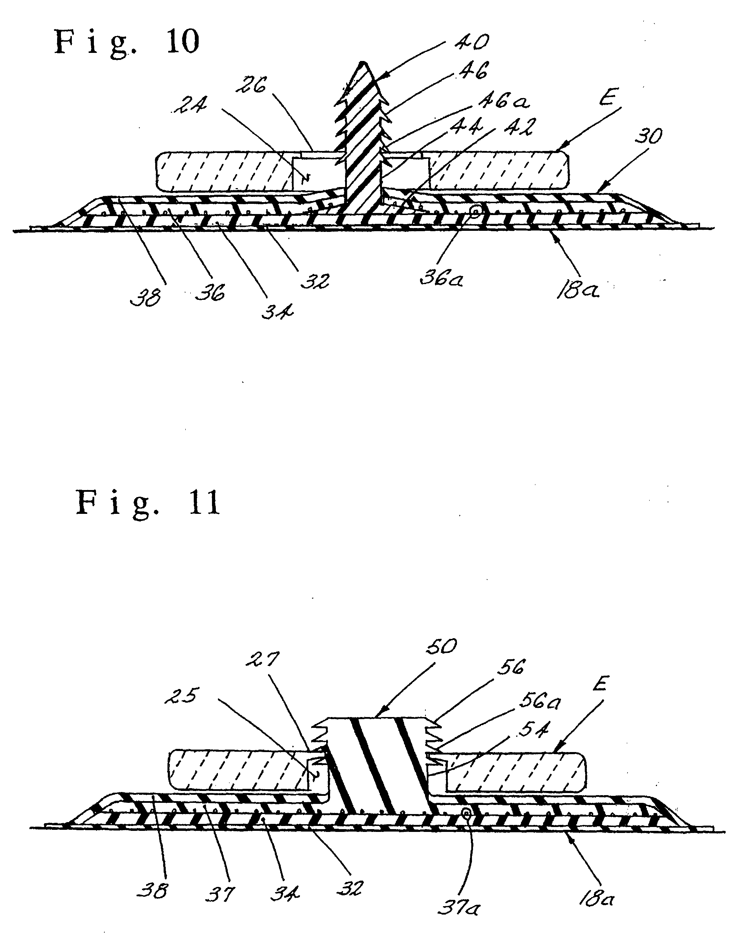

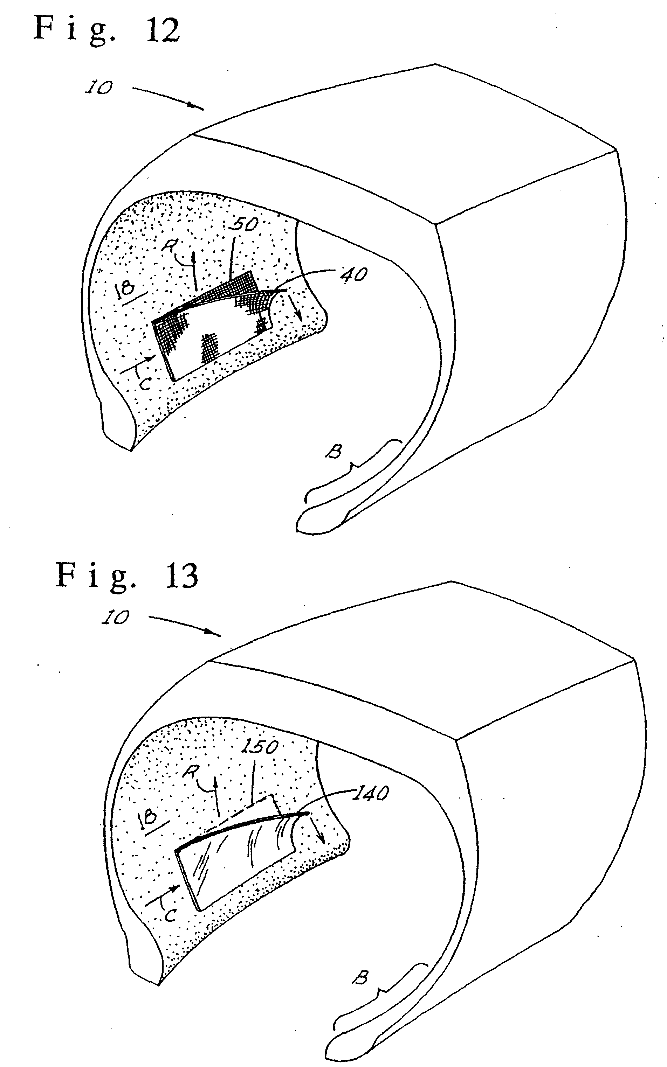

Describing in more detail the retainer assembly of the support system A, reference is made to the cross-sectional drawings of Figs. 10 and 11. The cross-sectional view of the preferred embodiment of Figs. 2 and 3 is taken along line 10-10 of Fig. 2, and is shown in Fig. 10. The four layers 32, 34, 36 and 38 of the reinforced rubber ply 30 are attached to the inner surface of the tire at an interface 18a. The fastener 40 has a base 42 placed between the second layer 34 and the reinforced third layer 36 with reinforcing members 36a. The shaft 44 of the fastener extends outward through third and fourth layers 36 and 38. The electronic package has retainer opening 24 to receive the shaft of the fastener. The shaft 44 has ratchet elements 46 that engage edge elements 26 within the retainer opening of the electronic package E when the electronic package is mounted. The electronic package is forced to make contact with the fourth layer of the reinforced rubber ply. One of the ratchet elements 46a is in a position to contact edge element 26 and hold the electronic package in an optimum position with respect to the reinforced rubber ply. This position being one to provide proper operation of the electronic package and an extended service life for the support system. The fastener can be made of any material commonly used for fasteners, but is preferably made of a plastic material such as nylon or a molded rubber. A typical nylon ratchet fastener is catalog number PC47486 made by TRW, Inc. of Lyndhurst, Ohio.

The cross-sectional view of the first alternate embodiment of Figs. 4 and 5 is taken along line 11-11 of Fig. 4 and is shown in Fig. 11. The four layers 32, 34, 37 and 38 of the reinforced rubber ply 30 are attached to the inner surface of the tire at an interface 18a. The fastener 50 is uniquely made to be an integral part of the third layer 37 with reinforcing members 37a. The shaft 54 of the fastener extends outward through fourth layer 38. The electronic package has retainer opening 25 to receive the shaft of the fastener. The shaft 54 has ratchet elements 56 that engage edge elements 27 within the retainer opening of the electronic package E when the electronic package is mounted. During mounting, the electronic package is forced to make contact with the fourth layer of the reinforced rubber ply. One of the ratchet elements 56a is in a position to contact edge element 27 and hold the electronic package in an optimum position with respect to the reinforced rubber ply. This position, once again, being a placement to provide proper operation of the electronic package and an extended service life for the support system.

The support system or device of this invention can be used either with a tire which has been cured to provide a surface area to receive and carry the rubber ply or with an aftermarket tire where a surface area is prepared after curing the tire to receive and carry the rubber ply. Providing a proper surface area for affixing the rubber ply to the inside surface of the tire is achieved by two different means. The desired results are the same; which is to have a surface area which permits a positive attachment between a conventional innerliner portion of the tire and the rubber ply of this invention without affecting the integrity of the innerliner portion. Since the conventional innerliner is generally not a clean or properly textured surface, it is necessary to prepare this innerliner by buffing or grinding to provide a properly conditioned surface area. Various means for preparing a surface area are known in the industry that can achieve a surface area suitable for affixing a rubber ply without affecting the integrity of the innerliner. The area must be adequate in size and texture for achieving a surface area to accommodate the rubber ply holding an electronic package for production and aftermarket tires within the scope of this invention.

A means and method for providing a surface area within the tire during curing of the tire for attachment of the support system or device of this invention is illustrated in Fig. 12. A fabric sheet 40 of material cut to the size of the required surface area 50 is placed on the inner surface 18 of the tire 10 in a bead area B on either side of the tire prior to curing. Preferably, the fabric sheet has square woven cords which provide an embossed area when forced into the inner surface of the tire during curing of the tire. The fabric sheet can be made using any suitable material used in the manufacture of tires. The fabric sheet is removed after a given post-cure time to provide a conditioned, treated, clean and textured surface area within the tire suitable for affixing the rubber ply to the surface area.

In another example, an embodiment is illustrated in Fig. 13 showing a plastic or rubber sheet 140 applied directly to a surface area 150 on the inner surface 18 of the tire 10 in a bead area B on either side of the tire prior to curing the tire. Preferably, the plastic or rubber sheet has a smooth surface which provides a smooth area when forced into the inner surface of the tire during curing of the tire. Smooth sheet 140 can be made using any suitable compound used in the manufacture of tires. The sheet is removed after a given post-cure time to provide a conditioned, treated, clean and smooth surface area within the tire suitable for affixing the rubber ply to surface area 150..

It is also within the scope of this invention to attach a rubber ply directly to the inside of a tire during curing of the tire as a further variation of the embodiments of the support system or device. Any of the rubber plies disclosed above and those similar can be positioned within the green tire prior to curing of the tire. Careful control of the rubber ply when it is installed in the green tire in used to maintain the integrity of the tire innerliner during curing of the tire and after the tire is cured.

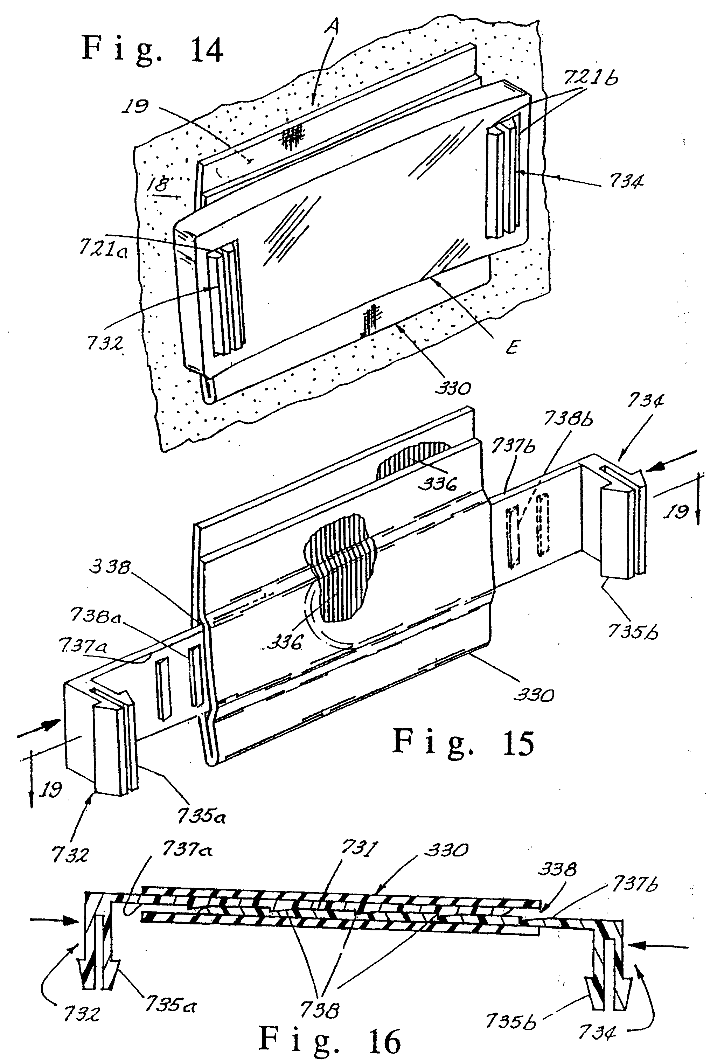

In a fourth alternate embodiment of the support device of this invention the fasteners include straps made of a semi-rigid material such as a plastic or a molded rubber. In this embodiment of the support device A, fasteners include two semi-rigid straps 732 and 734 with a pair of slotted rectangular shaped fasteners 735a and 735b. Each slotted fastener extends from, and is made to be integral with, a respective semi-rigid strap, as illustrated in Figs. 14-16. The slotted fasteners engage edge elements of retainer openings 721a and 721b in the electronic package E. The retainer openings are shaped to allow the slotted fasteners to snap in place for supporting and holding the electronic package in contact with a folded reinforced rubber ply 330, The folded reinforced rubber ply is essentially the same as previously described with the second alternate embodiment, illustrated in Fig. 7. The folded reinforced rubber ply is again affixed to the inner surface 18 of the tire at the support interface 19. Slotted fasteners having a circular cross-sectional shape to engage circular or elongated retainer openings are also within the scope of this invention. The preferred shape of the slotted fasteners for this fourth alternate embodiment is rectangular to provide stability of the semi-rigid straps when placed adjacent to one another within strap pocket 338.

The first semi-rigid strap 732 and the second semi-rigid strap 734 are made with locking elements 738a and 738b respectively so that the two straps will become locked together when placed in the strap pocket 338 to overlap one another, as illustrated in Figs. 15 and 16. A front surface portion 737a of first semi-rigid strap 732 has locking elements 738a that project from the surface portion of the first semi-rigid strap. A rear surface portion 737b of the second semi-rigid strap 734 has locking elements 738b that are recessed in the surface portion of the second semi-rigid strap portion. Placing the two semi-rigid straps in the strap pocket from opposite sides of folded reinforced rubber ply 330, as shown by the side arrows, until they overlap one another at a strap interface 731, locks the straps together when forces are applied to pull the straps in a direction opposite the arrows. The number, size and location of the locking elements can vary within the scope of this invention. After placing the straps in strap pocket 338 the electronic package is forced on to the fasteners to contact folded reinforced rubber ply 330 at the same time the retainer openings in the electronic package receive the slotted fasteners. The fasteners snap in place at the edge elements of retainer openings 721a and 721b to support and hold the electronic package E against the folded reinforced rubber ply 330 of the retainer device A (Fig. 14). The semi-rigid straps including their integral fasteners can be made of any material commonly used for tires, but preferably are of a plastic material such as a nylon or a molded rubber.

Any of the support device structure and features described above for one embodiment can be combined with another embodiment for supporting and holding the electronic package within the tire. Other devices and apparatus can be supported and held by the support system of this invention. Alternate locations within the tire can also be selected for locating the surface area within the tire where the electronic package will be positioned. Electronic packages of different shape and size from those illustrated can also be attached with the support device and method of this invention.

While a preferred embodiment of the invention has been described using specific terms, such description is for illustrative purposes only, and it is to be understood that changes and variations may be made without departing from the scope of the following claims.

## Claims

1. A structural support system used with a tire (10) for supporting an electronic package (E) for monitoring the tire when placed within a cavity of the tire, said structural support system comprising:
a rubber ply (30) affixed to an inner surface (18) of said tire at a predetermined location;
at least one fastener (40, 50, 340, 735a, 735b) carried by said rubber ply (30) to the inside of said tire;
said electronic package being formed with at least one retainer opening (22, 24, 25, 424, 721a, 721b) to receive said at least one fastener (40, 50, 340, 735a, 735b);
each retainer opening (22, 24, 25, 424, 721a, 721b) having at least one edge element (26, 27) for maintaining contact with said at least one fastener (40, 50, 340, 735a, 735b) for supporting and retaining said electronics package within said tire; and
a retainer assembly (20, 320) associated with said at least one fastener (40, 50, 340, 735a, 735b) and said at least one edge element (26, 27) for adjusting the position of said electronics package (E) to the inside of said tire adjacent to said rubber ply.

2. The system of claim 1 wherein said rubber ply includes a plurality of layers for providing compliance with said tire and with said at least one fastener.

3. The system of claim 2 wherein said retainer assembly includes:
said fastener having a base embedded between said layers of said rubber ply and a shaft extending from said rubber ply, said shaft having a plurality of ratchet elements extending from said shaft; and
said edge element being side projections from said retainer opening through said electronic package, wherein said ratchet elements remain in contact with said projections within said retainer opening.

4. The system of claim 3 wherein there are two fasteners extending through two retainer openings in said electronic package so that each fastener engages edge elements within a respective retainer opening.

5. The system of claim 3 wherein said retainer opening is elongated in one direction for providing the electronic package with the ability to adjust its relative position adjacent to said reinforced rubber ply.

6. The system of claim 1 wherein said rubber ply is a reinforced rubber ply formed with a plurality of layers and a pocket for receiving a portion of said fastener.

7. The system of claim 6 wherein said retainer assembly includes:
said fastener being formed as a strap with a pair of free ends, said strap to extend through said pocket of said reinforced rubber ply; and
said retainer opening of said electronic package being cutouts at each end of said electronic package, wherein said strap is folded around said electronic package and said free ends are attached to one another.

8. A support device used within a tire (10) for installing and removing an electronic package (E) placed within a cavity of the tire, said support device comprising:
a rubber ply (30) affixed to the inner surface of said tire;
at least one fastener formed as a strap (331,732,734) including a pair of free ends and carried by said rubber ply for supporting and retaining said electronics package within said tire; and
a retainer assembly (320) having components associated with said at least one strap (331, 732, 734) and said electronic package for holding said electronics package at a predetermined location to the inside of said tire adjacent said rubber ply.

9. The support device set forth in claim 8 wherein said rubber ply is a folded reinforced rubber ply providing a strap pocket formed within said folded reinforced rubber ply for receiving said at least one strap such that said free ends of said at least one strap are connected together by said retainer assembly components.

10. The support device set forth in claim 9 wherein said at least one strap is an single elongated continuous strap, said continuous strap providing said pair of free ends when placed through said strap pocket to extend from said pocket in opposite directions from one another.

11. The support device set forth in claim 10 wherein said retainer assembly includes loop elements attached to a first strap end of said continuous strap and hook elements attached to a second strap end of said continuous strap so that the hook and loop elements are brought in contact with one another when folding the continuous strap around said electronic package for retaining and holding said electronics package.

12. The support device set forth in claim 9 wherein said at least one fastener formed as a strap comprises:
two semi-rigid straps each being placed within said strap pocket to contact and overlap one another at a strap interface;
a slotted rectangular shaped fastener at an outer end of each semi-rigid strap for receiving and supporting said electronic package in contact with said folded rubber ply; and
a plurality of locking elements at said strap interface for holding said semi-rigid straps together in a circumferential C-direction within said pocket of said folded rubber ply.

13. A method for attaching the support system of claim 1 and the electronic package (E) to the inner surface of the tire (10), said system-method **characterized by** the steps of:
a) forming a conditioned surface area located interior to said tire for positioning said electronic package within said tire adjacent said surface area location;
b) providing said rubber ply (30) to include a plurality of layers and an interface surface associated with said inner surface area of the tire;
c) embedding a portion of said at least one fastener (40, 50, 340, 735a, 735b) so that said at least one fastener is carried by said rubber ply;
d) affixing said rubber ply to said surface area so that said rubber ply is attached to said tire;
e) placing said electronic package within said tire to contact said at least one fastener (40, 50, 340, 735a, 735b) to the interior of said tire;
f) supporting and holding said electronic package in contact with said rubber ply (30) using said retainer assembly (20, 320) having components associated with said at least one fastener (40, 50, 340, 735a, 735b) and said electronic package; and
g) adjusting said retainer assembly (20, 320) to hold said electronic package in a predetermined position adjacent said rubber ply (30) and said inner surface of said tire.

14. The system-method of claim 13 wherein the step of forming said conditioned surface area is further **characterized by** the steps of;
placing a sheet of material within said tire before curing of said tire; and
removing said sheet of material from said inner surface of said tire after curing said tire.

15. The system-method of claim 13 wherein the step of forming said conditioned surface area is further **characterized by** the step of grinding the internal surface of said tire over an area consistent with said interface surface of said rubber ply.

16. The system-method of claim 13 wherein the step of embedding a portion of said at least one fastener is further **characterized by** the steps of;
providing said at least one fastener with a base and a shaft extending therefrom, said shaft including ratchet elements; and
embedding said base between two of said plurality of layers of said rubber ply.

17. The system-method of claim 16 wherein the step of supporting and holding said electronic package is further **characterized by** the steps of;
forcing said electronic package to make contact with said rubber ply; and
adjusting the relative position of said electronic package with respect to said rubber ply.

18. The system-method of claim 13 wherein the step of embedding a portion of said at least one fastener includes:
providing said at least one fastener in the form of an elongated reinforced strap having free ends;
placing said strap through a pocket formed in a folded reinforced rubber ply; and
extending said free ends from said folded reinforced rubber ply.

19. The system-method of claim 18 wherein the step of placing said electronic package within said tire is further **characterized by** the step of wrapping said strap around said electronic package in a circumferential C-direction of the tire.

20. The system-method of claim 18 wherein the step of placing said electronic package within said tire is further **characterized by** the step of wrapping said strap around said electronic package in a radial R-direction of the tire.

21. The system-method of claim 18 wherein the step of adjusting said strap is further **characterized by** the step of connecting said free ends of said strap together by the steps of:
providing hook and loop fastener elements each attached to a respective one of said free ends; and
forcing said free ends to make contact with one another so that said hook elements are in contact with said loop elements.

22. The system-method set forth in claim 13 wherein the steps of forming a conditioned surface area interior to said tire and affixing said rubber ply to said surface area is further **characterized by** the step of placing said rubber ply within a green tire and curing the tire to provide the rubber ply within a cured tire when manufactured.

## Patentansprüche

1. Strukturelles Trägersystem, das zusammen mit einem Reifen (10) zum Tragen eines elektronischen Moduls (E) zur Überwachung des Reifens verwendet wird, wenn es innerhalb eines Hohlraums des Reifens angeordnet wird, wobei das genannte, strukturelle Trägersystem die folgenden Merkmale aufweist:
eine Gummilage (30), die an einer Innenoberfläche (18) des genannten Reifens an einer bestimmten Stelle befestigt ist;
mindestens eine Befestigungseinrichtung (40, 50, 340, 735a, 735b), die von der genannten Gummilage (30) an der Innenseite des genannten Reifens getragen ist;
das genannte elektronische Modul ist mit mindestens einer Halteöffnung (22, 24, 25, 424, 721a, 721b) ausgebildet, um die genannte, mindestens eine Befestigungseinrichtung (40, 50, 340, 735a, 735b) aufzunehmen;
jede Halteöffnung (22, 24, 25, 424, 721a, 721b) weist mindestens ein Kantenelement (26, 27) zum Aufrechterhalten der Berührung mit der mindestens einen Befestigungseinrichtung (40, 50, 340, 735a, 735b) auf, um das genannte, elektronische Modul innerhalb des genannten Reifens abzustützen und zu halten; und
eine Halteanordnung (20, 320), die der genannten, mindestens einen Befestigungseinrichtung (40, 50, 340, 735a, 735b) und dem genannten, mindestens einen Kantenelement (26, 27) zugeordnet ist, um die Lage des genannten, elektronischen Moduls (E) an der Innenseite des genannten Reifens nahe der genannten Gummilage einzustellen.

2. System nach Anspruch 1, worin die genannte Gummilage eine Vielzahl von Schichten aufweist, um eine Übereinstimmung mit dem genannten Reifen und mit der genannten, mindestens einen Befestigungseinrichtung herzustellen.

3. System nach Anspruch 2, worin die genannte Halteanordnung die folgenden Merkmale aufweist:
die genannten Befestigungseinrichtung hat eine Unterseite, die zwischen den genannten Schichten der genannten Gummilage eingebettet ist, und einen Schaft, der sich von der genannten Gummilage aus erstreckt, und der genannte Schaft hat eine Vielzahl von Sperrklinkenelementen, die sich vom genannten Schaft wegerstrecken; und
das genannte Kantenelement bildet seitliche Vorsprünge von der genannten Halteöffnung durch das genannte, elektronische Modul hindurch, worin die genannten Sperrklinkenelemente in Berührung mit den genannten Vorsprüngen innerhalb der genannten Halteöffnung verbleiben.

4. System des Anspruchs 3, worin es zwei Befestigungseinrichtungen gibt, die sich durch zwei Halteöffnungen im genannten, elektronischen Modul erstrecken, so daß jede Befestigungseinrichtung in Kantenelemente innerhalb einer jeweiligen Halteöffnung eingreift.

5. System nach Anspruch 3, worin die genannte Halteöffnung länglich in einer Richtung ist, um das elektronische Modul mit der Fähigkeit zu versehen, seine Relativlage nahe der genannten, verstärkten Gummilage einzustellen.

6. System nach Anspruch 1, worin die genannte Gummilage eine verstärkte Gummilage ist, die mit einer Vielzahl von Schichten und einer Tasche zur Aufnahme eines Teils der genannten Befestigungseinrichtung ausgebildet ist.

7. System nach Anspruch 6, worin die genannte Halteanordnung folgende Merkmale umfaßt:
die genannte Befestigungseinrichtung ist als ein Streifen mit einem Paar freier Enden ausgebildet, so daß sich der genannte Streifen durch die genannte Tasche der genannten, verstärkten Gummilage hindurch erstreckt; und
die genannte Halteöffnung des genannten, elektronischen Moduls besteht aus Ausschnitten an jedem Ende des genannten, elektronischen Moduls, worin der genannte Streifen um das genannte, elektronische Modul herumgefaltet ist und die genannten, freien Enden aneinander angebracht sind.

8. Tragevorrichtung, die innerhalb eines Reifens (10) verwendet wird, um ein elektronisches Modul (E) ein- und auszubauen, das innerhalb eines Hohlraums des Reifens angeordnet ist, wobei die genannte Tragevorrichtung die folgenden Merkmale aufweist:
eine Gummilage (30), die an der Innenoberfläche des genannten Reifens befestigt ist;
mindestens eine Befestigungseinrichtung, die als Streifen (331, 732, 734) mit einem Paar freier Enden ausgebildet ist und von der genannten Gummilage getragen ist, um das genannte, elektronische Modul innerhalb des Reifens zu tragen und zu halten; und
eine Halteanordnung (320) mit Bestandteilen, die dem genannten, mindestens einen Streifen (331, 732, 734) und dem genannten, elektronischen Modul zugeordnet sind, um das genannte, elektronische Modul an einer bestimmten Stelle an die Innenseite des genannten Reifens nahe der genannten Gummilage anzuhalten.

9. Tragevorrichtung nach Anspruch 8, worin die genannte Gummilage eine gefaltete, verstärkte Gummilage ist, die für eine Streifentasche sorgt, die in der genannten, gefalteten, verstärkten Gummilage zur Aufnahme des genannten, mindestens einen Streifens so ausgebildet ist, daß die genannten, freien Enden des genannten, mindestens einen Streifens durch die genannten Bestandteile der Halteanordnung miteinander verbunden sind.

10. Tragevorrichtung nach Anspruch 9, worin der genannte, mindestens eine Streifen ein einziger, länglicher, durchgehender Streifen ist, wobei der genannte, durchgehende Streifen für das genannte Paar freier Enden sorgt, wenn er durch die genannte Streifentasche hindurch so angeordnet ist, daß sie sich von der genannten Tasche in zueinander entgegengesetzten Richtungen weg erstrecken.

11. Tragevorrichtung nach Anspruch 10, worin die genannte Halteanordnung Schlaufenelemente umfaßt, die an einem ersten Streifenende des genannten, durchgehenden Streifens angebracht sind, sowie Hakenelemente, die an einem zweiten Streifenelement des genannten, durchgehenden Streifens angebracht sind, so daß die Haken- und Schlaufenelemente miteinander in Berührung gebracht werden, wenn man den genannten, durchgehenden Streifen rund um das genannte, elektronische Modul herumfaltet und er das genannte, elektronische Modul hält.

12. Tragevorrichtung nach Anspruch 9, worin die genannte, als Steifen ausgebildete, mindestens eine Befestigungseinrichtung die folgenden Merkmale aufweist:
zwei halbstarre Streifen, von denen jeder so in der genannten Streifentasche angeordnet ist, daß sie einander berühren und einander an einer Streifen-Übergangsfläche überdecken;
eine geschlitzte, rechteckig geformte Befestigungseinrichtung an einem äußeren Ende eines jeden halbstarren Streifens zur Aufnahme und Halterung des genannten, elektronischen Moduls in Berührung mit der genannten, gefalteten Gummilage; und
eine Vielzahl von Verriegelungselementen an der genannten Streifen-Übergangsfläche, um die genannten , halbstarren Streifen in einer C-förmigen Umfangsrichtung innerhalb der genannten Tasche der genannten, gefalteten Gummilage zu halten.

13. Verfahren zur Anbringung des Trägersystems des Anspruchs 1 und des elektronischen Moduls (E) an der Innenoberfläche des Reifens (10), wobei das genannten System-Verfahren durch die folgenden Schritte gekennzeichnet ist:
a) Bilden eines vorbereiteten Oberflächenbereichs, der im Inneren des genannten Reifens gelegen ist, zur Positionierung des genannten, elektronischen Moduls im Inneren des genannten Reifens nahe der Anordnungsstelle des genannten Oberflächenbereichs;
b) Zubereiten der genannten Gummilage (30) auf eine solche Weise, daß sie eine Vielzahl von Schichten und eine Übergangsfläche aufweist, die dem genannten, inneren Oberflächenbereich des Reifens zugeordnet ist;
c) Einbetten eines Abschnitts der genannten, mindestens einen Befestigungseinrichtung (40, 50, 340, 735a, 735b), so daß die genannte, mindestens eine Befestigungseinrichtung von der genannten Gummilage getragen ist;
d) Befestigen der genannten Gummilage am genannten Oberflächenbereich, so daß die genannte Gummilage am genannten Reifen angebracht ist;
e) Versetzen des genannten, elektronischen Moduls in das Innere des Reifens, so daß es die genannte, mindestens eine Befestigungseinrichtung (40, 50, 340, 735a, 735b) im Inneren des genannten Reifens berührt;
f) Tragen und Halten des genannten, elektronischen Moduls in Berührung mit der genannten Gummilage (30) unter Verwendung der genannten Halteanordnung (20, 320), die Bestandteile aufweist, die der mindestens einen Befestigungseinrichtung (40, 50, 340, 735a, 735b) und dem genannten, elektronischen Modul zugeordnet sind; und
g) Einstellen der genannten Halteanordnung (20, 320), um das genannte, elektronische Modul in einer bestimmten Lage nahe der genannten Gummilage (30) und der genannten Innenoberfläche des genannten Reifens zu halten.

14. System-Verfahren nach Anspruch 13, worin der Schritt der Bildung des genannten, vorbereiteten Oberflächenbereiches ferner **gekennzeichnet ist durch** die folgenden Schritte:
Anordnen eines Materialbogens im Inneren des genannten Reifens vor der Vulkanisation des genannten Reifens; und
Entfernen des genannten Materialbogens von der genannten Innenoberfläche des genannten Reifens nach der Vulkanisation des genannten Reifens.

15. System-Verfahren nach Anspruch 13, worin der Schritt der Bildung des genannten, vorbereiteten Oberflächenbereiches ferner **gekennzeichnet ist durch** den Schritt des Schleifens der Innenoberfläche des genannten Reifens über einem Bereich, der mit der genannten Innenoberfläche der genannten Gummilage übereinstimmt.

16. System-Verfahren nach Anspruch 13, worin der Schritt des Einbettens eines Abschnitts der genannten, mindestens einen Befestigungseinrichtung ferner **gekennzeichnet ist durch** die folgenden Schritte:
Versehen der mindestens einen Befestigungseinrichtung mit einer Basis und einem Schaft, der sich hiervon erstreckt, wobei der genannte Schaft Sperrzahnelemente aufweist; und
Einbetten der genannten Basis zwischen zwei der genannten Vielzahl von Schichten der genannten Gummilage.

17. System-Verfahren nach Anspruch 16, worin der Schritt des Tragens und Haltens des genannten, elektronischen Moduls ferner **gekennzeichnet ist durch** die folgenden Schritte:
Drücken auf das genannte, elektronische Modul, so daß es eine Berührung mit der genannten Gummilage herstellt; und
Einstellen der Relativlage des genannten, elektronischen Moduls in Bezug auf die genannten Gummilage.

18. System -Verfahren nach Anspruch 13, worin der Schritt des Einbettens eines Abschnitts der mindestens einen Befestigungseinrichtung folgendes umfaßt:
Bereitstellen der genannten, mindestens einen Befestigungseinrichtung in Form eines länglichen, verstärkten Streifens, der freie Enden aufweist;
Einsetzen des genannten Streifens durch eine Tasche hindurch, die in einer gefalteten, verstärkten Gummilage ausgebildet ist; und
Ausstrecken der genannten, freien Enden von der genannten, gefalteten Gummilage her.

19. System-Verfahren nach Anspruch 18, worin der Schritt des Einsetzens des genannten, elektronischen Moduls in das Innere des genannten Reifens ferner **gekennzeichnet ist durch** den Schritt des Herumwickelns des genannten Streifens um das genannte, elektronische Modul herum in einer Umfangs-C-Richtung des Reifens.

20. System-Verfahren nach Anspruch 18, worin der Schritt des Einsetzens des genannten, elektronischen Moduls ferner **gekennzeichnet ist durch** den Schritt, den genannten Streifen rund um das genannte, elektronische Modul in einer radialen R-Richtung des Reifens herumzuwikkeln.

21. System-Verfahren nach Anspruch 18, worin der Schritt der Einstellung des genannten Streifens ferner **gekennzeichnet ist durch** den Schritt der Verbindung der freien Enden des genannten Streifens miteinander **durch** die folgenden Schritte:
Bereitstellen von Haken- und Schlaufen-Befestigungselementen, die an einem jeweiligen, freien Ende angebracht sind; und
Drücken auf die genannten, freien Enden, so daß sie miteinander derart in Berührung treten, daß die genannten Hakenelemente in Berührung mit den genannten Schlaufenelementen stehen.

22. System-Verfahren nach Anspruch 13, worin die Schritte der Bildung eines vorbereiteten Oberflächenbereiches im Inneren des Reifens und der Befestigung der genannten Gummilage an dem genannten Oberflächenbereich ferner **gekennzeichnet sind durch** den Schritt, die genannte Gummilage in einen Rohreifen einzulegen und den Reifen zu vulkanisieren, um bei der Herstellung die Gummilage im Inneren eines vulkanisierten Reifens bereitzustellen.

## Revendications

1. Système structurel de support utilisé avec un pneumatique (10) pour supporter un ensemble électronique (E) destiné à contrôler le pneumatique quand il est placé dans une cavité du pneumatique, ledit système structurel de support comprenant :
un pli en caoutchouc (30) fixé à une surface intérieure (18) dudit pneumatique à un emplacement prédéterminé ;
au moins une fixation (40, 50, 340, 735a, 735b) portée par ledit pli en caoutchouc (30) à l'intérieur dudit pneumatique ;
ledit ensemble électronique étant formé avec au moins une ouverture de retenue (22, 24, 25, 424, 721a, 721b) pour recevoir ladite au moins une fixation (40, 50, 340, 735a, 735b) ;
chaque ouverture de retenue (22, 24, 25, 424, 721a, 721b) ayant au moins un élément de bord (26, 27) pour maintenir le contact avec ladite au moins une fixation (40, 50, 340, 735a, 735b) pour porter et retenir ledit ensemble électronique à l'intérieur dudit pneumatique ; et
un ensemble de retenue (20, 320) associé avec ladite au moins une fixation (40, 50, 340, 735a, 735b) et ledit au moins un élément de bord (26, 27) pour ajuster la position dudit ensemble électronique (E) adjacente audit pli en caoutchouc à l'intérieur dudit pneumatique.

2. Système de la revendication 1 dans lequel ledit pli en caoutchouc comprend une pluralité de couches pour fournir l'élasticité par rapport audit pneumatique et à ladite au moins une fixation.

3. Système de la revendication 2 dans lequel ledit ensemble de retenue comprend :
ladite fixation ayant une base encastrée entre lesdites couches dudit pli en caoutchouc et un axe s'étendant à partir dudit pli en caoutchouc, ledit axe ayant une pluralité d'éléments de cliquet s'étendant à partir dudit axe ; et
ledit élément de bord étant formé par les projections latérales de ladite retenue s'ouvrant à travers ledit ensemble électronique, dans lequel lesdits éléments de cliquet demeurent en contact avec lesdites projections à l'intérieur de ladite ouverture de retenue.

4. Système de la revendication 3 dans lequel il y a au moins deux fixations s'étendant à travers deux ouvertures de retenue dans ledit ensemble électronique de façon que chaque fixation s'engage dans les éléments de bord à l'intérieur d'une ouverture de retenue respective.

5. Système de la revendication 3 dans lequel ladite ouverture de retenue est allongée dans une direction pour fournir à l'ensemble électronique la capacité d'ajuster sa position relative adjacente audit pli en caoutchouc renforcé.

6. Système de la revendication 1 dans lequel ledit pli en caoutchouc est un pli en caoutchouc renforcé formé avec une pluralité de couches et une poche pour recevoir une partie de ladite fixation.

7. Système de la revendication 6 dans lequel ledit ensemble de retenue comprend :
ladite fixation ayant la forme d'une sangle avec une paire d'extrémités libres, ladite sangle pouvant s'étendre à travers ladite poche dudit pli en caoutchouc renforcé ; et
ladite ouverture de retenue dudit ensemble électronique étant constituée de découpes pratiquées à chaque extrémité dudit ensemble électronique, dans lesquelles ladite sangle est repliée autour dudit ensemble électronique et lesdites extrémités libres sont fixées l'une à l'autre.

8. Dispositif de support utilisé dans un pneumatique (10) pour mettre en place et retirer un ensemble électronique (E) placé dans une cavité du pneumatique, ledit dispositif de support comprenant :
un pli en caoutchouc (30) fixé à une surface intérieure dudit pneumatique ;
au moins une fixation revêtant la forme d'une sangle (331, 732, 734) comprenant une paire d'extrémités libres et portée par ledit pli en caoutchouc pour supporter et retenir ledit ensemble électronique dans ledit pneumatique ; et
un ensemble de retenue (320) ayant des composants associés à ladite au moins une sangle (331, 732, 734) et audit ensemble électronique pour maintenir ledit ensemble électronique à un emplacement prédéterminé à l'intérieur dudit pneumatique et adjacent audit pli en caoutchouc.

9. Dispositif de support exposé dans la revendication 8 dans lequel ledit pli en caoutchouc est un pli en caoutchouc renforcé replié fournissant une poche à sangle formée dans ledit pli en caoutchouc renforcé replié pour recevoir ladite au moins une sangle de telle façon que lesdites extrémités libres de ladite au moins une sangle soit connectées ensemble par les composants dudit ensemble de retenue.

10. Dispositif de support exposé dans la revendication 9 dans lequel ladite au moins une sangle est une sangle unique continue allongée, ladite sangle continue fournissant ladite paire d'extrémités libres quand elle est placée à travers ladite poche à sangles pour qu'elles s'étendent de ladite poche dans des directions opposées l'une par rapport à l'autre.

11. Dispositif de support exposé dans la revendication 10 dans lequel ledit ensemble de retenue comprend des éléments de boucles fixés à une première extrémité de sangle de ladite sangle continue et des éléments de crochets fixés à une deuxième extrémité de sangle de ladite sangle continue de façon que les éléments de crochets et de boucles soient mis en contact les uns avec les autres quand on replie la sangle continue autour dudit ensemble électronique pour retenir et maintenir ledit ensemble électronique.

12. Dispositif de support exposé dans la revendication 9 dans lequel ladite au moins une fixation en forme de sangle comprend :
deux sangles semi-rigides placées chacune dans ladite poche à sangles pour être en contact et se chevaucher l'une par rapport à l'autre à une interface de sangle ;
une fixation de forme rectangulaire à encoches à une extrémité extérieure de chaque sangle semi-rigide pour recevoir et porter ledit ensemble électronique en contact avec ledit pli en caoutchouc replié ; et
une pluralité d'éléments de verrouillage à ladite interface de sangle pour maintenir lesdites sangles semi-rigides ensemble dans une direction circonférentielle C dans ladite poche dudit pli en caoutchouc replié.

13. Procédé pour la fixation du système de support de la revendication 1 et de l'ensemble électronique (E) sur la surface intérieure du pneumatique (10), ledit système-procédé étant **caractérisé par** les étapes de :
a) formation d'une zone de surface conditionnée située à l'intérieur dudit pneumatique pour le positionnement dudit ensemble électronique dans ledit pneumatique adjacent à l'emplacement de la zone de ladite surface ;
b) fourniture dudit pli en caoutchouc (30) pour inclure une pluralité de couches et une surface d'interface associée à ladite zone de surface intérieure du pneumatique ;
c) encastrement d'une partie de ladite au moins une fixation (40, 50, 340, 735a, 735b) de façon que ladite au moins une fixation soit portée par ledit pli en caoutchouc ;
d) fixation dudit pli en caoutchouc à ladite zone de surface de façon que ledit pli en caoutchouc soit fixé audit pneumatique ;
e) mise en place dudit ensemble électronique dans ledit pneumatique pour contacter ladite au moins une fixation (40, 50, 340, 735a, 735b) à l'intérieur dudit pneumatique ;
f) support et maintien dudit ensemble électronique en contact avec ledit pli en caoutchouc (30) utilisant ledit ensemble de retenue (20, 320) ayant des composants associés avec ladite au moins une fixation (40, 50, 340, 735a, 735b) et ledit ensemble électronique ; et
g) réglage dudit ensemble de retenue (20, 320) pour maintenir ledit ensemble électronique dans une position prédéterminée adjacente audit pli en caoutchouc (30) et à ladite surface intérieure dudit pneumatique.

14. Système-procédé de la revendication 13 dans lequel l'étape de formation de ladite zone de surface conditionnée est en outre **caractérisée par** les étapes de ;
mise en place d'une feuille de matériau dans ledit pneumatique avant la vulcanisation dudit pneumatique ; et
retrait de ladite feuille de matériau de ladite surface intérieure dudit pneumatique après la vulcanisation dudit pneumatique.

15. Système-procédé de la revendication 13 dans lequel l'étape de formation de ladite zone de surface conditionnée est en outre **caractérisée par** l'étape de ponçage de la surface interne dudit pneumatique sur une zone correspondant à ladite surface d'interface dudit pli en caoutchouc.

16. Système-procédé de la revendication 13 dans lequel l'étape d'encastrement d'une partie de ladite au moins une fixation et en outre **caractérisée par** les étapes de :
fourniture à ladite au moins une fixation d'une base et d'un axe s'étendant à partir de celle-ci, ledit axe comprenant des éléments de cliquet ; et
encastrement de ladite base entre deux parmi la pluralité de couches dudit pli en caoutchouc.

17. Système-procédé de la revendication 16 dans lequel l'étape de support et de maintien dudit ensemble électronique est en outre **caractérisée par** les étapes de :
forçage dudit ensemble électronique en contact avec ledit pli en caoutchouc ; et
réglage de la position relative dudit ensemble électronique par rapport audit pli en caoutchouc.

18. Système-procédé de la revendication 13 dans lequel l'étape d'encastrement d'une partie de ladite au moins une fixation comprend :
la fourniture de ladite au moins une fixation sous la forme d'une sangle renforcée allongée ayant des extrémités libres ;
la mise en place de ladite sangle à travers une poche formée dans un pli en caoutchouc renforcé replié ; et
le prolongement desdites extrémités libres à partir dudit pli en caoutchouc renforcé replié.

19. Système-procédé de la revendication 18 dans lequel l'étape de mise en place dudit ensemble électronique dans ledit pneumatique est en outre **caractérisée par** l'étape consistant à envelopper ladite sangle autour dudit ensemble électronique dans une direction circonférentielle C du pneumatique.

20. Système-procédé de la revendication 18 dans lequel l'étape de mise en place dudit ensemble électronique dans ledit pneumatique est en outre **caractérisée par** l'étape consistant à envelopper ladite sangle autour dudit ensemble électronique dans une direction radiale R du pneumatique.

21. Système-procédé de la revendication 18 dans lequel l'étape de réglage de ladite sangle est en outre **caractérisée par** l'étape consistant à connecter lesdites extrémités libres de ladite sangle ensemble par les étapes de :
fourniture d'éléments de crochets et de boucles fixés à une respective desdites extrémités libres ; et
forçage desdites extrémités libres en contact l'une avec l'autre de façon que lesdits éléments de crochets soient en contact avec lesdits éléments de boucles.

22. Système-procédé exposé dans la revendication 13 dans lequel les étapes de formation d'une zone de surface conditionnée intérieure audit pneumatique et de fixation dudit pli en caoutchouc sur ladite zone de surface sont en outre **caractérisées par** l'étape consistant à placer ledit pli en caoutchouc dans un pneumatique en construction et à vulcaniser le pneumatique pour fournir le pli en caoutchouc à l'intérieur du pneumatique vulcanisé quand il est fabriqué.
